# EUROPEAN PATENT SPECIFICATION

(11) **EP 4 039 565 B1**
(45) Date of publication and mention of the grant of the patent: **08.11.2023**
(21) Application number: 20871470.9
(22) Date of filing: 07.05.2020
(51) Int. Cl.: B62D 21/00, B62D 25/04, B62D 25/06, G06F 30/20, G10K 11/16, G10K 11/162, G06F 30/15, G06F 119/10

(54) **VIBRATION NOISE REDUCTION ANALYSIS METHOD AND ANALYSIS DEVICE FOR AUTOMOTIVE PANEL COMPONENT**
VERFAHREN UND VORRICHTUNG ZUR ANALYSE VON SCHWINGUNGSGERÄUSCHEN FÜR EIN KRAFTFAHRZEUGKAROSSERIEBAUTEIL
PROCÉDÉ D'ANALYSE DE RÉDUCTION DE BRUIT DE VIBRATION ET DISPOSITIF D'ANALYSE POUR COMPOSANT DE PANNEAU DE VÉHICULE AUTOMOBILE

(30) Priority: 30.09.2019 JP 2019178377
(43) Date of publication of application: 10.08.2022
(73) Proprietor: JFE Steel Corporation, Tokyo 100-0011 (JP)
(72) Inventor: NAKAGAWA, Koichi, Tokyo 100-0011 (JP); SAITO, Takanobu, Tokyo 100-0011 (JP); SHIOZAKI, Tsuyoshi, Tokyo 100-0011 (JP)
(74) Representative: Hoffmann Eitle
(86) International application number: PCT/JP2020/018490
(87) International publication number: WO 2021/065064

(56) References cited:
- JP-A- 2002 297 670
- JP-A- 2015 185 143
- JP-A- 2015 185 143
- JP-A- 2018 005 677
- JP-A- 2019 114 114
- JP-A- 2019 114 114

## Description

### Field

The present invention relates to a vibration noise reduction analysis method and analyzer for automotive panel parts, and more specifically, to a vibration noise reduction analysis method and analyzer for automotive panel parts, used for obtaining optimal divided areas of an automotive body frame part in a vibration transmission path that leads from an exciter of an automobile to an automotive panel part, and a sheet thickness of each of the divided areas in order to reduce vibration noise in the panel part.

### Background

Automotive panel parts such as a floor panel, a dash-lower panel, and a roof panel are obtained by press-forming a steel sheet, an aluminum alloy sheet, or the steel sheet or aluminum alloy sheet galvanized with Zn alloy or the like. Vibrations of these panel parts cause road noise or booming noise, resulting in worsening of cabin noise. Thus, reducing cabin noise is an issue in improving the quietness and commercial value of automobiles.

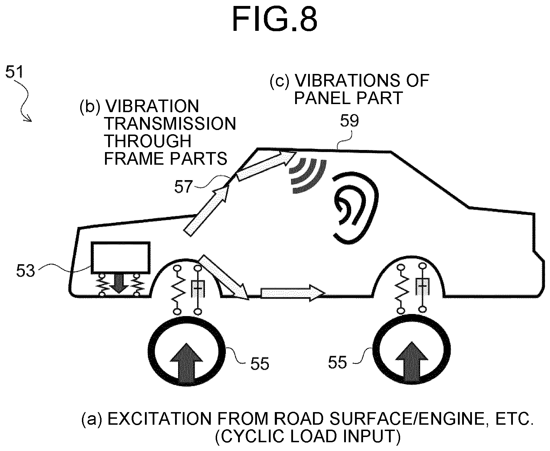

It is considered that vibration noise in an automotive panel part is caused, as illustrated in FIG. 8, by (a) vibrations in an exciter such as an engine 53 of an automobile 51 and tires 55 to which a cyclic load is inputted from a road surface or the like during driving (b) being transmitted through frame parts 57 that constitute an automotive body frame (c) to vibrate a panel part 59. One of measures to reduce vibration noise in the panel part is to reduce vibrations by applying a measure to the panel part itself in consideration of the factor of (c).

As an effective conventional technique for reducing vibration noise in the panel part, a bead has been formed in the panel part. Non Patent Literature 1 discloses a technique of obtaining an optimal position of a bead formed in a panel part as a vibration noise reduction target. In automobiles for which emphasis is placed on design, however, it is difficult to directly form the bead in an outer panel part such as a roof panel. There is also a problem in that the bead interferes with an adjacent inner panel part. Thus, it has been needed to apply a measure to a frame part in a vibration transmission path of an automobile.

Some techniques for reducing vibrations of the panel part by applying a measure to the frame part in the vibration transmission path of the automobile have also been developed. For example, Patent Literature 1 discloses a technique of allowing a bead to work as a breakpoint of vibration transmission by forming the bead in a front cowl that is disposed between right and left side parts of an automotive body so as not to transmit vibrations to a dash panel through the right and left side parts and the front cowl while the vehicle is running. Patent Literature 2 also discloses a technique of suppressing vibrations of a roof panel even when resonance occurs in an automotive body frame due to engine vibrations or the like, by increasing the widths of center portions in an automotive body width direction of a certain roof bow and at least one roof bow adjacent to the certain roof bow as compared with the widths of other roof bows in an automotive body roof structure in which the roof panel is joined onto the roof bows that are disposed at predetermined intervals in an automotive body longitudinal direction. JP2019114114 discloses a method for vibration analysis of automobile panels using finite element methods and equivalent radiation power to simulate the vibration of individual panels.

### Citation List

### Patent Literature

Patent Literature 1: Japanese Patent Application Laid-open No. 2010-228718
Patent Literature 2: Japanese Patent Application Laid-open No. 2007-186086

### Non Patent Literature

Non Patent Literature 1: "Structural optimization design software Altair OptiStruct", [online], Retrieved July 18, 2019 from Internet <URL: https://www.terrabyte.co.jp/Hyper/OptiStruct-3.htm>

### Summary

### Technical Problem

Unfortunately, with the technique disclosed in Patent Literature 1, while vibrations can be blocked in a vibration transmission path in a specific mode in which an empirical or intuitive judgment is made based on a part area or the like by employing a structure in which the bead is formed in the frame part, vibrations cannot be blocked in another vibration transmission path in a different mode. Thus, the technique disclosed in Patent Literature 1 cannot sufficiently reduce vibration noise in many cases.

Additionally, the technique disclosed in Patent Literature 2 has a problem in that the weight is significantly increased by increasing the widths of the center portions of the roof bows, and is sometimes difficult to achieve since the frame part interferes with another part when its shape is greatly changed.

Therefore, a need exists for a technique that allows for efficient reduction of vibration noise in the automotive panel part without requiring a significant change in the weight or shape of the frame part in the vibration transmission path of the panel part.

The present invention has been made to solve the problems as described above, and an object thereof is to provide a vibration noise reduction analysis method and analyzer for automotive panel parts, used for reducing vibration noise in a panel part transmitted through a plurality of frame parts from a vibration source of an automobile.

### Solution to Problem

### <Circumstances leading to Invention>

As described above, to reduce vibration noise in an automotive panel part, it is effective to apply such a measure as to achieve a structure in which vibration transmission is blocked, to a frame part in a vibration transmission path that leads from a vibration source of an automobile to the panel part.

To block the vibration transmission, it is considered effective to enhance the stiffness of the frame part in the vibration transmission path by sheet thickness optimization of the frame part.

Unfortunately, since an automotive body frame of the automobile is composed of hundreds of frame parts, it is inefficient and extremely difficult to reduce vibration noise in the panel part by specifying a frame part to which the measure is to be applied from these frame parts in conventional techniques. There is also a problem in that automotive body characteristics other than vibration characteristics are not satisfied in some cases.

As a result of intensive studies, the present inventors have thought of specifying a vibration transmission frame part that greatly contributes to vibration noise caused by vibrations of a panel part as a vibration noise reduction target, from vibration transmission frame parts that serve as a vibration transmission path from an exciter of an automobile to the panel part, and obtaining and setting an optimal sheet thickness for suppressing vibration transmission in the specified vibration transmission frame part, to thereby efficiently reduce the vibration noise in the panel part.

That is, by modeling an automotive body of the automobile with subdivided meshes, and obtaining vibration energy (vibration intensity) by vibration energy analysis, a vibration transmission frame part that serves as a transmission path most likely to transmit vibrations is specified. Subsequently, sheet thickness optimization analysis of the vibration transmission frame part is performed by employing equivalent radiated power (ERP) from the panel part as an objective function, a total weight as a constraint, and a sheet thickness as a design variable.

The specified vibration transmission frame part can be set to an optimal sheet thickness by performing the sheet thickness optimization analysis using a vibration transmission frame part model obtained by modeling the vibration transmission frame part with subdivided meshes as described above. The sheet thickness optimization analysis, however, obtains an optimal sheet thickness for each subdivided mesh of the vibration transmission frame part model. It is thus unpractical to set the sheet thickness of the vibration transmission frame part according to the optimal sheet thicknesses of the respective meshes of the vibration transmission frame part model in an actual manufacturing process of the vibration transmission frame part.

The present inventors have further studied the method of determining the optimal sheet thickness of the vibration transmission frame part in order to allow for manufacture of the vibration transmission frame part that reduces vibration noise in the panel part. As a result, the present inventors have conceived that the vibration transmission frame part can be manufactured by use of, for instance, a tailored blank by setting a plurality of divided areas each having a predetermined range of the vibration transmission frame part model based on the optimal sheet thickness obtained for each mesh, re-obtaining an optimal sheet thickness for each of the set divided areas, and setting each divided area to the optimal sheet thickness. The present invention has been made based on the above idea, and specifically has the following configuration.

A vibration noise reduction analysis method according to the present invention for automotive panel parts is executed by a computer and used for reducing vibration noise in a panel part caused by vibrations transmitted from an exciter of an automobile to the panel part through vibration transmission frame parts and includes: an automotive body mesh model acquisition process; a specific frequency band selection process for a vibration noise reduction target panel part model; a vibration transmission frame part model specification process; an individual mesh sheet thickness optimization process; a divided area setting process for a vibration transmission frame part model; an individual divided-area sheet thickness optimization process; and a divided area/optimal sheet thickness determination process for a vibration transmission frame part, wherein the automotive body mesh model acquisition process includes acquiring an automotive body mesh model including a vibration noise reduction target panel part model and vibration transmission frame part models obtained by modeling the panel part as a vibration noise reduction target and the vibration transmission frame parts that transmit vibrations from the exciter, each with meshes, and in which the exciter is set, the specific frequency band selection process for a vibration noise reduction target panel part model includes obtaining frequency characteristics of equivalent radiated power (ERP) of the vibration noise reduction target panel part model as a vibration noise index of the panel part as the vibration noise reduction target, and selecting a specific frequency band based on the obtained frequency characteristics of the equivalent radiated power (ERP), the vibration transmission frame part model specification process includes obtaining vibration energy of each mesh in the vibration transmission frame part models and the vibration noise reduction target panel part model, and specifying a vibration transmission frame part model that greatly contributes to vibrations in the specific frequency band of the vibration noise reduction target panel part model from the vibration transmission frame part models, the individual mesh sheet thickness optimization process includes obtaining a sheet thickness optimized for each mesh of the specified vibration transmission frame part model by performing sheet thickness optimization analysis to optimize the sheet thickness with an objective function set to minimization of the equivalent radiated power in the specific frequency band of the vibration noise reduction target panel part model, a constraint set to a total weight of the specified vibration transmission frame part model equal to or less than a predetermined weight, and a design variable set to the sheet thickness of each mesh of the specified vibration transmission frame part model, the divided area setting process for a vibration transmission frame part model includes setting divided areas obtained by dividing the specified vibration transmission frame part model into groups each having a predetermined range of sheet thicknesses based on the optimized sheet thickness of each mesh obtained at the individual mesh sheet thickness optimization process, the individual divided-area sheet thickness optimization process includes obtaining a sheet thickness optimized for each divided area of the specified vibration transmission frame part model by performing sheet thickness optimization analysis to optimize the sheet thickness with an objective function set to minimization of the equivalent radiated power in the specific frequency band of the vibration noise reduction target panel part model, a constraint set to a total weight of the specified vibration transmission frame part model equal to or less than a predetermined weight, and a design variable set to the sheet thickness of each of the divided areas of the specified vibration transmission frame part model, and the divided area/optimal sheet thickness determination process for a vibration transmission frame part includes determining divided areas of the vibration transmission frame part corresponding to the specified vibration transmission frame part model, and an optimal sheet thickness of each of the divided areas based on the divided areas of the specified vibration transmission frame part model and the sheet thickness optimized for each of the divided areas.

A vibration noise reduction analyzer according to the present invention for automotive panel parts is used for reducing vibration noise in a panel part caused by vibrations transmitted from an exciter of an automobile to the panel part through vibration transmission frame parts, and includes: an automotive body mesh model acquisition unit; a specific frequency band selection unit for a vibration noise reduction target panel part model; a vibration transmission frame part model specification unit; an individual mesh sheet thickness optimization unit; a divided area setting unit for a vibration transmission frame part model; an individual divided-area sheet thickness optimization unit; and a divided area/optimal sheet thickness determination unit for a vibration transmission frame part, wherein the automotive body mesh model acquisition unit is configured to acquire an automotive body mesh model including a vibration noise reduction target panel part model and vibration transmission frame part models obtained by modeling the panel part as a vibration noise reduction target and the vibration transmission frame parts that transmit vibrations from the exciter, each with meshes, and in which the exciter is set, the specific frequency band selection unit for a vibration noise reduction target panel part model is configured to obtain frequency characteristics of equivalent radiated power (ERP) of the vibration noise reduction target panel part model as a vibration noise index of the panel part as the vibration noise reduction target, and select a specific frequency band based on the obtained frequency characteristics of the equivalent radiated power (ERP), the vibration transmission frame part model specification unit is configured to obtain vibration energy of each mesh in the vibration transmission frame part models and the vibration noise reduction target panel part model, and specify a vibration transmission frame part model that greatly contributes to vibrations in the specific frequency band of the vibration noise reduction target panel part model from the vibration transmission frame part models, the individual mesh sheet thickness optimization unit is configured to obtain a sheet thickness optimized for each mesh of the specified vibration transmission frame part model by performing sheet thickness optimization analysis to optimize the sheet thickness with an objective function set to minimization of the equivalent radiated power in the specific frequency band of the vibration noise reduction target panel part model, a constraint set to a total weight of the specified vibration transmission frame part model equal to or less than a predetermined weight, and a design variable set to the sheet thickness of each mesh of the specified vibration transmission frame part model, the divided area setting unit for a vibration transmission frame part model is configured to set divided areas obtained by dividing the specified vibration transmission frame part model into groups each having a predetermined range of sheet thicknesses based on the optimized sheet thickness of each mesh obtained by the individual mesh sheet thickness optimization unit, the individual divided-area sheet thickness optimization unit is configured to obtain a sheet thickness optimized for each divided area of the specified vibration transmission frame part model by performing sheet thickness optimization analysis to optimize the sheet thickness with an objective function set to minimization of the equivalent radiated power in the specific frequency band of the vibration noise reduction target panel part model, a constraint set to a total weight of the specified vibration transmission frame part model equal to or less than a predetermined weight, and a design variable set to the sheet thickness of each of the divided areas of the specified vibration transmission frame part model, and the divided area/optimal sheet thickness determination unit for a vibration transmission frame part is configured to determine divided areas of the vibration transmission frame part corresponding to the specified vibration transmission frame part model, and an optimal sheet thickness of each of the divided areas based on the divided areas of the specified vibration transmission frame part model and the sheet thickness optimized for each of the divided areas. Advantageous Effects of Invention

In the present invention, the vibration transmission frame part that serves as a vibration transmission path from the exciter of the automobile to the panel part as the vibration noise reduction target of the automobile in the specific frequency band of the panel part as the vibration noise reduction target is specified, and the sheet thicknesses of the specified vibration transmission frame part are optimized. After that, the vibration transmission frame part is redivided into the areas each having a predetermined range of sheet thicknesses based on the optimized sheet thicknesses, and the sheet thicknesses of the redivided areas are optimized. The vibration noise in the automotive panel part caused by the vibrations of the exciter can be thereby efficiently and surely reduced. This contributes to an improvement in the quietness and commercial value of the automobile.

### Brief Description of Drawings

FIG. 1 is a block diagram illustrating a vibration noise reduction analyzer for automotive panel parts according to an embodiment of the present invention.
FIG. 2 is a view illustrating an automotive body mesh model including panel part and vibration transmission frame part models as analysis targets in the embodiment of the present invention.
FIG. 3 is a view illustrating an exciter of a right front subframe set in the automotive body mesh model in the embodiment of the present invention.
FIG. 4 is a flowchart diagram illustrating a processing flow of a vibration noise reduction analysis method for automotive panel parts according to the embodiment of the present invention.
FIG. 5 is a view illustrating an example result of vibration energy (vibration acceleration) in vibration transmission frame part models obtained by vibration energy analysis for specifying a vibration transmission path that leads from the exciter to the vibration noise reduction target panel part model (roof panel model) in the automotive body mesh model in the present embodiment.
FIG. 6 is a view illustrating an example result of a distribution of sheet thicknesses of respective meshes of a vibration transmission frame part model that reduces vibration noise in the roof panel model of the automotive body mesh model in the present embodiment.
FIG. 7 is a view illustrating an example result of divided areas of the vibration transmission frame part model that reduces vibration noise in the roof panel model, and their sheet thicknesses in the present embodiment.
FIG. 8 is a view for explaining vibrations of a panel part transmitted through vibration transmission frame parts from an exciter of an automobile as an object of the present invention.

### Description of Embodiments

Before describing a vibration noise reduction analysis method and analyzer for automotive panel parts according to an embodiment of the present invention, a panel part as a vibration noise reduction target of an automobile and a frame part that transmits vibrations from an exciter of the automobile, which are analysis targets in the present invention, will be described. In the following description, when facing in a vehicle advancing direction, the widthwise right will be referred to as the right side, and the widthwise left as the left side.

### <Panel part as Vibration noise reduction target and Vibration transmission frame part of Automobile>

The panel part as the vibration noise reduction target of the automobile, which is the analysis target in the present invention, is an outer panel or an inner panel that is a part having a thin sheet structure. Examples thereof include a roof panel and a floor panel. The vibration transmission frame part of the automobile, which is the analysis target in the present invention, is a part constituting an automotive body frame of the automobile. Examples thereof include a roof rail, an A pillar, a B pillar, a C pillar, and a side sill. The automotive body frame composed of these parts has an exciter to which vibrations (cyclic load) are inputted from an engine or a road surface while the automobile is driving.

### <Vibration noise reduction analyzer for Automotive panel parts>

Next, a configuration of the vibration noise reduction analyzer for automotive panel parts (hereinafter simply referred to as "vibration noise reduction analyzer") according to the embodiment of the present invention will be described below.

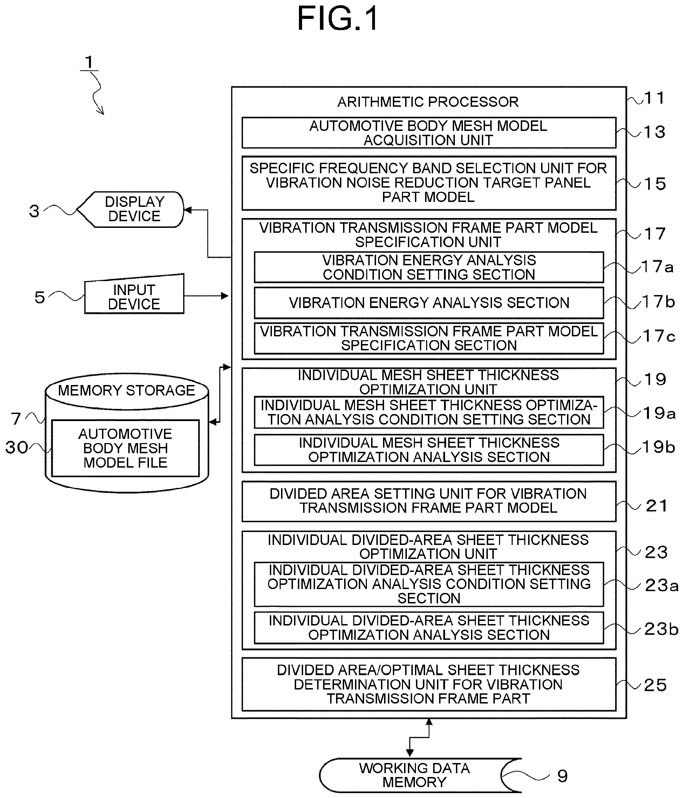

A vibration noise reduction analyzer 1 according to the present embodiment specifies a vibration transmission frame part in a vibration transmission path that leads from an exciter of an automobile to an automotive panel part as a vibration noise reduction target, divides the specified vibration transmission frame part into predetermined areas, and obtains an optimal sheet thickness for each area in order to reduce vibration noise caused by vibrations of the panel part. As illustrated in FIG. 1, the vibration noise reduction analyzer 1 is configured by a personal computer (PC) or the like, and includes a display device 3, an input device 5, a memory storage 7, a working data memory 9, and an arithmetic processor 11.

The display device 3, the input device 5, the memory storage 7, and the working data memory 9 are connected to the arithmetic processor 11 to execute their functions according to a command from the arithmetic processor 11. Hereinafter, each configuration of the vibration noise reduction analyzer 1 will be described. Note that x, y, and z directions illustrated in the drawings of this application indicate an automotive body longitudinal direction, an automotive body width direction, and an automotive body vertical direction, respectively.

### «Display device»

The display device 3 is used for displaying an analysis result or the like, and is configured by, for example, a liquid crystal monitor.

### «Input device»

The input device 5 is used for instructing display of an automotive body mesh model file 30, inputting conditions by an operator, or the like, and is configured by, for example, a keyboard or a mouse.

### «Memory storage»

The memory storage 7 is used for storing various files such as the automotive body mesh model file 30 or the like, and is configured by, for example, a hard disk.

An automotive body mesh model includes a vibration noise reduction target panel part model obtained by modeling a panel part as a vibration noise reduction target with subdivided meshes (two-dimensional elements), and a plurality of vibration transmission frame part models obtained by modeling a plurality of vibration transmission frame parts constituting an automotive body frame structure, each with meshes (two-dimensional elements and/or three-dimensional elements). The automotive body mesh model file 30 stores various information of the automotive body mesh model. The automotive body mesh model file 30 stores information regarding elements and nodes, information regarding material properties, and the like as the various information of the automotive body mesh model.

### «Working data memory»

The working data memory 9 is used for temporary saving (storage) of data used in the arithmetic processor 11, and for arithmetic operations, and is configured by, for example, a random access memory (RAM).

### «Arithmetic Processor»

As illustrated in FIG. 1, the arithmetic processor 11 includes an automotive body mesh model acquisition unit 13, a specific frequency band selection unit 15 for the vibration noise reduction target panel part model, a vibration transmission frame part model specification unit 17, an individual mesh sheet thickness optimization unit 19, a divided area setting unit 21 for the vibration transmission frame part model, an individual divided-area sheet thickness optimization unit 23, and a divided area/optimal sheet thickness determination unit 25 for the vibration transmission frame part. The arithmetic processor 11 is configured by a central processing unit (CPU) of the PC or the like. Each unit functions by the CPU executing a predetermined computer program. The functions of the above respective units in the arithmetic processor 11 will be described below.

### (Automotive body mesh model acquisition unit)

The automotive body mesh model acquisition unit 13 acquires the automotive body mesh model including the vibration noise reduction target panel part model and the vibration transmission frame part models obtained by modeling the panel part as the vibration noise reduction target and the vibration transmission frame parts that transmit vibrations from the exciter of the automobile, each with meshes, and in which the exciter is set.

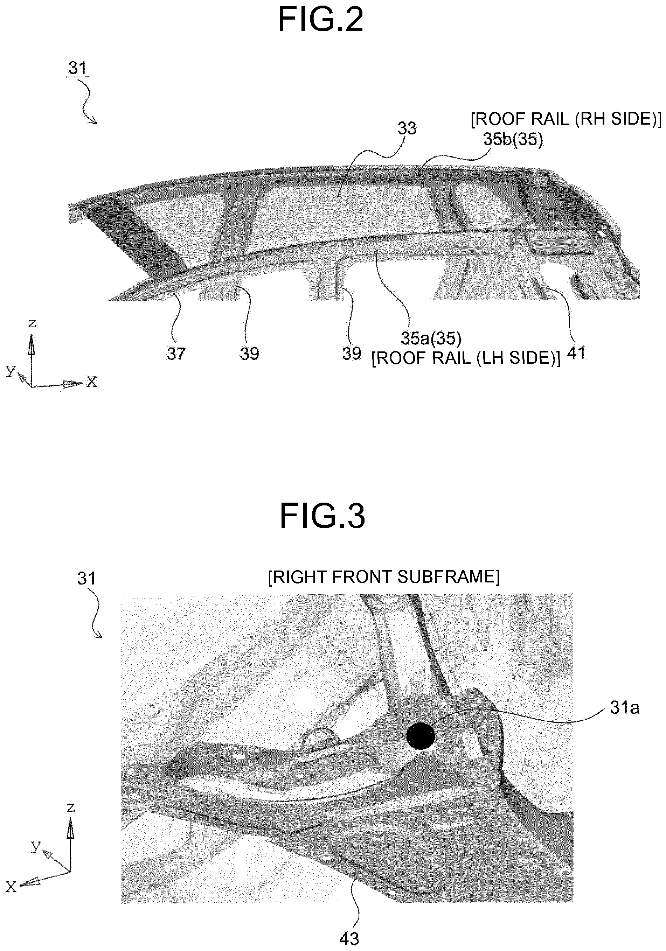

FIGS. 2 and 3 illustrate an example of an automotive body mesh model 31. The automotive body mesh model 31 includes a roof panel model 33 as the vibration noise reduction target panel part model, and a roof rail model 35, an A pillar model 37, a B pillar model 39, a C pillar model 41, and a front subframe model 43 as the vibration transmission frame part models. An exciter 31a in the automotive body frame of the automobile is also set in the front subframe model 43.

The automotive body mesh model 31 can be acquired by reading element information or material property information from the automotive body mesh model file 30 stored in the memory storage 7.

### (Specific frequency band selection unit for Vibration noise reduction target panel part model)

The specific frequency band selection unit 15 for the vibration noise reduction target panel part model selects a specific frequency band in which equivalent radiated power (ERP) of the vibration noise reduction target panel part model set as an objective function for sheet thickness optimization of the vibration transmission frame part model as described later, or vibration energy thereof is minimized.

A frequency band or a vibration mode in which the vibration noise reduction target panel part model is vibrated by the exciter set in the automotive body mesh model can be determined by frequency response analysis, for example, vibration mode analysis or vibration energy analysis, using the automotive body mesh model including the targeted vibration noise reduction target panel part model.

In the automotive body mesh model, vibrations are transmitted from the exciter to the vibration transmission frame part models to vibrate the vibration noise reduction target panel part model. The equivalent radiated power (ERP) or the vibration energy of the vibrations of the vibration noise reduction target panel part model varies depending on a vibration frequency.

Thus, in the present embodiment, the specific frequency band selection unit 15 for the vibration noise reduction target panel part model obtains frequency characteristics of the equivalent radiated power (ERP) of the vibration noise reduction target panel part model as a vibration noise index of the panel part as the vibration noise reduction target, and selects a specific frequency band having large equivalent radiated power based on the frequency characteristics. The equivalent radiated power (ERP) in the specific frequency band is minimized by sheet thickness optimization analysis described later. For example, the specific frequency band having large equivalent radiated power (ERP) is any frequency range in which the frequency characteristics of the equivalent radiated power (ERP) have a maximum value.

The specific frequency band selection unit 15 for the vibration noise reduction target panel part model is not limited to selecting the specific frequency band having large equivalent radiated power (ERP), and may optionally select a specific frequency band in which the equivalent radiated power or the vibration energy is to be reduced.

### (Vibration transmission frame part model specification unit)

The vibration transmission frame part model specification unit 17 obtains vibration energy of each mesh in the vibration transmission frame part models and the vibration noise reduction target panel part model, and specifies a vibration transmission frame part model that greatly contributes to vibrations in the specific frequency band of the vibration noise reduction target panel part model from the vibration transmission frame part models.

In the present embodiment, the vibration transmission frame part model specification unit 17 has a vibration energy analysis condition setting section 17a, a vibration energy analysis section 17b, and a vibration transmission frame part model specification section 17c as illustrated in FIG. 1.

The vibration energy analysis condition setting section 17a sets vibrations inputted to the exciter of the automotive body mesh model, displacement by the vibrations, or the like as vibration energy analysis conditions applied in vibration energy analysis for obtaining the vibration energy of each mesh in the vibration transmission frame part models and the vibration noise reduction target panel part model.

The vibration energy analysis (vibration intensity analysis) means calculation of the vibration energy of each mesh from energy balance between elements (meshes) of a target structure. In the present embodiment, the vibration energy calculated by the vibration energy analysis is physical energy or strain energy of each mesh.

The vibration energy analysis section 17b obtains the vibration energy of each mesh from energy balance between meshes in each of the vibration transmission frame part models and the vibration noise reduction target panel part model in the automotive body mesh model under the vibration energy analysis conditions set by the vibration energy analysis condition setting section 17a.

The vibration transmission frame part model specification section 17c selects vibration transmission frame part models that serve as a vibration transmission path of the vibration noise reduction target panel part model in the specific frequency band selected by the specific frequency band selection unit 15 for the vibration noise reduction target panel part model based on the vibration energy value obtained for each mesh by the vibration energy analysis section 17b. The vibration transmission frame part model specification section 17c specifies a vibration transmission frame part model having large mesh vibration energy obtained by the vibration energy analysis section 17b from the selected vibration transmission frame part models.

The vibration energy as an index for specifying the vibration transmission frame part model by the vibration transmission frame part model specification section 17c may be the physical energy or the strain energy obtained as the vibration energy of each mesh by the vibration energy analysis section 17b.

### (Individual mesh sheet thickness optimization unit)

The individual mesh sheet thickness optimization unit 19 obtains a sheet thickness optimized for each mesh of the vibration transmission frame part model specified by the vibration transmission frame part model specification unit 17.

In the present embodiment, the individual mesh sheet thickness optimization unit 19 has an individual mesh sheet thickness optimization analysis condition setting section 19a and an individual mesh sheet thickness optimization analysis section 19b as illustrated in FIG. 1.

The individual mesh sheet thickness optimization analysis condition setting section 19a sets sheet thickness optimization analysis conditions for each mesh in sheet thickness optimization analysis for optimizing the sheet thickness of each mesh. In the present embodiment, an objective function regarding vibration noise in the vibration noise reduction target panel part model and a constraint regarding a total weight of the vibration transmission frame part model are set as the sheet thickness optimization analysis conditions for each mesh.

The objective function is set to minimization of the equivalent radiated power in the specific frequency band of the vibration noise reduction target panel part model as the vibration noise index of the automotive panel part. Here, the specific frequency band is the specific frequency band selected by the specific frequency band selection unit 15 for the vibration noise reduction target panel part model. Additionally, the constraint is set such that the total weight of the vibration transmission frame part model is equal to or less than a predetermined weight.

The individual mesh sheet thickness optimization analysis section 19b sets the sheet thicknesses of the meshes in the automotive body mesh model as design variables, and performs the sheet thickness optimization analysis to optimize the set sheet thickness of each mesh so as to satisfy the objective function and the constraint set by the individual mesh sheet thickness optimization analysis condition setting section 19a. The individual mesh sheet thickness optimization analysis section 19b thereby obtains the sheet thickness optimized for each mesh. Here, the value or range of the design variable set for each mesh is preferably set according to the type of the sheet thickness such as a steel sheet used for manufacture of an actual vibration transmission frame part.

A large sheet thickness of the mesh in the vibration transmission frame part model obtained by the individual mesh sheet thickness optimization analysis section 19b means that the sheet thickness of the mesh increases the stiffness of the vibration noise reduction target panel part model, greatly contributing to the minimization of the equivalent radiated power (ERP) in the specific frequency band. This indicates that the large sheet thickness of the mesh greatly contributes to reduction of vibration noise in the panel part as the vibration noise reduction target.

Meanwhile, a small sheet thickness of the mesh in the vibration transmission frame part model obtained by the individual mesh sheet thickness optimization analysis section 19b means that the sheet thickness of the mesh less contributes to the stiffness of the vibration noise reduction target panel part model, and less contributes to the minimization of the equivalent radiated power (ERP) in the specific frequency band. This indicates that the small sheet thickness of the mesh less contributes to reduction of vibration noise in the panel part as the vibration noise reduction target.

### (Divided area setting unit for Vibration transmission frame part model)

The divided area setting unit 21 for the vibration transmission frame part model sets divided areas obtained by dividing the vibration transmission frame part model specified by the vibration transmission frame part model specification unit 17 into groups each having a predetermined range of sheet thicknesses based on the sheet thickness optimized for each mesh by the individual mesh sheet thickness optimization unit 19.

Since each mesh having the sheet thickness obtained by the individual mesh sheet thickness optimization unit 19 is significantly small, it is difficult to manufacture the actual vibration transmission frame part while changing the sheet thickness according to such subdivided meshes.

Thus, for the vibration transmission frame part model specified by the vibration transmission frame part model specification unit 17, meshes, the optimized sheet thicknesses of which obtained by the individual mesh sheet thickness optimization unit 19 are within a predetermined range, are put into a group, and the vibration transmission frame part model is divided by the area of each mesh group to set the divided areas.

The predetermined range of the sheet thickness of each mesh for dividing the vibration transmission frame part model is preferably set according to, for example, the type of the sheet thickness such as a steel sheet used for manufacture of the actual vibration transmission frame part. Additionally, the steel sheet having a different sheet thickness in each division can be manufactured by means of a tailored blank or the like, and press-formed into the vibration transmission frame part.

### (Individual divided-area sheet thickness optimization unit)

The individual divided-area sheet thickness optimization unit 23 obtains a sheet thickness optimized for each divided area of the vibration transmission frame part model specified by the vibration transmission frame part model specification unit 17.

In the present embodiment, the individual divided-area sheet thickness optimization unit 23 has an individual divided-area sheet thickness optimization analysis condition setting section 23a and an individual divided-area sheet thickness optimization analysis section 23b as illustrated in FIG. 1.

The individual divided-area sheet thickness optimization analysis condition setting section 23a sets sheet thickness optimization analysis conditions for each divided area in sheet thickness optimization analysis for optimizing the sheet thickness of each divided area. In the present embodiment, an objective function regarding vibration noise in the vibration noise reduction target panel part model and a constraint regarding a total weight of the vibration transmission frame part model are set as the sheet thickness optimization analysis conditions for each divided area.

The objective function is set to minimization of the equivalent radiated power in the specific frequency band of the vibration noise reduction target panel part model as the vibration noise index of the automotive panel part. Here, the specific frequency band is the specific frequency band selected by the specific frequency band selection unit 15 for the vibration noise reduction target panel part model. Additionally, the constraint is set such that the total weight of the vibration transmission frame part model is equal to or less than a predetermined weight.

The individual divided-area sheet thickness optimization analysis section 23b sets the sheet thicknesses of the divided areas of the vibration transmission frame part model specified by the vibration transmission frame part model specification unit 17, as design variables, and performs the sheet thickness optimization analysis to optimize the set sheet thickness of each divided area so as to satisfy the objective function and the constraint set by the individual divided-area sheet thickness optimization analysis condition setting section 23a. The individual divided-area sheet thickness optimization analysis section 23b thereby obtains the sheet thickness optimized for each divided area. Here, the value or range of the design variable set for each divided area is preferably set according to the type of the sheet thickness such as a steel sheet used for manufacture of the actual vibration transmission frame part.

A large sheet thickness of the divided area in the vibration transmission frame part model obtained by the individual divided-area sheet thickness optimization analysis section 23b means that the sheet thickness of the divided area increases the stiffness of the vibration noise reduction target panel part model, greatly contributing to the minimization of the equivalent radiated power in the specific frequency band, that is, the reduction of vibration noise.

Meanwhile, a small sheet thickness of the divided area in the vibration transmission frame part model obtained by the individual divided-area sheet thickness optimization analysis section 23b means that the sheet thickness of the divided area less contributes to the stiffness of the vibration noise reduction target panel part model, and less contributes to the reduction of vibration noise.

### (Divided area/optimal sheet thickness determination unit for Vibration transmission frame part)

The divided area/optimal sheet thickness determination unit 25 for the vibration transmission frame part determines divided areas of the vibration transmission frame part corresponding to the specified vibration transmission frame part model, and an optimal sheet thickness of each of the divided areas based on the divided areas set by the divided area setting unit 21 for the vibration transmission frame part model and the optimized sheet thickness of each divided area obtained by the individual divided-area sheet thickness optimization analysis section 23b regarding the vibration transmission frame part model specification unit 17.

### <Vibration noise reduction analysis method for Automotive panel parts>

Next, the configuration of the vibration noise reduction analysis method for automotive panel parts (hereinafter simply referred to as "vibration noise reduction analysis method") according to the present embodiment will be described below.

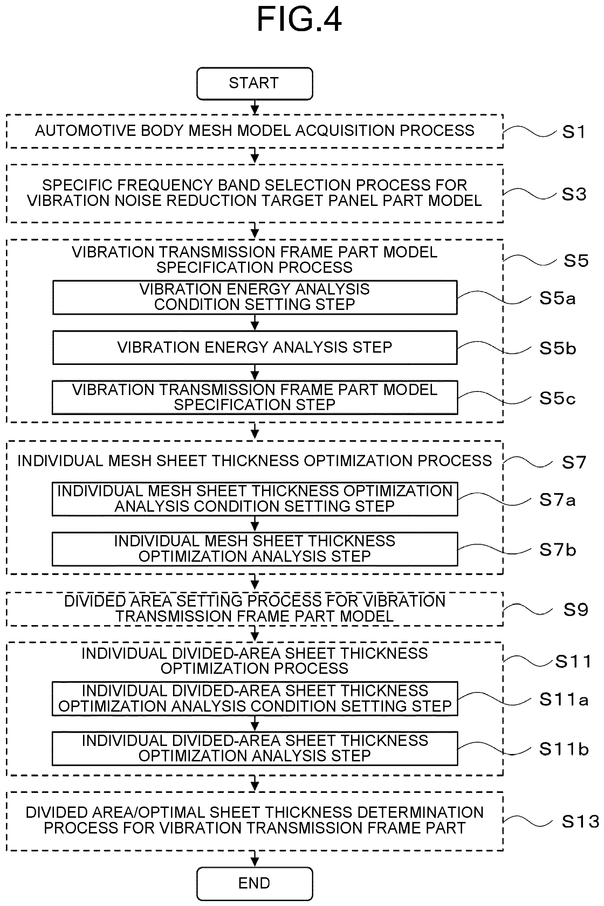

The vibration noise reduction analysis method according to the present embodiment reduces vibration noise in the panel part caused by vibrations transmitted from the exciter of the automobile to the panel part through the vibration transmission frame parts. As illustrated in FIG. 4, the vibration noise reduction analysis method includes an automotive body mesh model acquisition process S1, a specific frequency band selection process S3 for the vibration noise reduction target panel part model, a vibration transmission frame part model specification process S5, an individual mesh sheet thickness optimization process S7, a divided area setting process S9 for the vibration transmission frame part model, an individual divided-area sheet thickness optimization process S11, and a divided area/optimal sheet thickness determination process S13 for the vibration transmission frame part. Hereinafter, the above processes will be described based on the flowchart illustrated in FIG. 4. In the following description, all the above processes are executed by using the vibration noise reduction analyzer 1 (FIG. 1) configured by a computer according to the embodiment of the present invention.

### «Automotive body mesh model acquisition process»

The automotive body mesh model acquisition process S1 is a process of acquiring the automotive body mesh model including the vibration noise reduction target panel part model and the vibration transmission frame part models obtained by modeling the panel part as the vibration noise reduction target and the vibration transmission frame parts that transmit vibrations from the exciter of the automobile, each with meshes, and in which the exciter is set. In the present embodiment, the automotive body mesh model acquisition process S1 is performed by the automotive body mesh model acquisition unit 13 of the vibration noise reduction analyzer 1.

### «Specific frequency band selection process for Vibration noise reduction target panel part model»

The specific frequency band selection process S3 for the vibration noise reduction target panel part model is a process of selecting a specific frequency band in which equivalent radiated power (ERP) of the vibration noise reduction target panel part model set as an objective function for sheet thickness optimization of the vibration transmission frame part model as described later, or vibration energy thereof is minimized. In the present embodiment, the specific frequency band selection process S3 for the vibration noise reduction target panel part model is performed by the specific frequency band selection unit 15 for the vibration noise reduction target panel part model of the vibration noise reduction analyzer 1.

A frequency band or a vibration mode in which the vibration noise reduction target panel part model is vibrated by the exciter set in the automotive body mesh model can be determined by frequency response analysis, for example, vibration mode analysis or vibration energy analysis, using the automotive body mesh model including the targeted vibration noise reduction target panel part model.

In the automotive body mesh model, vibrations are transmitted from the exciter to the vibration transmission frame part models to vibrate the vibration noise reduction target panel part model. The equivalent radiated power (ERP) or the vibration energy of the vibrations of the vibration noise reduction target panel part model varies depending on a vibration frequency.

Thus, in the present embodiment, the specific frequency band selection process S3 for the vibration noise reduction target panel part model obtains frequency characteristics of the equivalent radiated power (ERP) of the vibration noise reduction target panel part model as a vibration noise index of the panel part as the vibration noise reduction target, and selects a specific frequency band having large equivalent radiated power based on the frequency characteristics. The equivalent radiated power (ERP) in the specific frequency band is minimized by sheet thickness optimization analysis described later. For example, the specific frequency band having large equivalent radiated power (ERP) is any frequency range in which the frequency characteristics of the equivalent radiated power (ERP) have a maximum value.

The specific frequency band selection process S3 for the vibration noise reduction target panel part model is not limited to selecting the specific frequency band having large equivalent radiated power (ERP), and may optionally select a specific frequency band in which the equivalent radiated power or the vibration energy is to be reduced.

### «Vibration transmission frame part model specification process»

The vibration transmission frame part model specification process S5 obtains vibration energy of each mesh in the vibration transmission frame part models and the vibration noise reduction target panel part model, and specifies a vibration transmission frame part model that greatly contributes to vibrations in the specific frequency band of the vibration noise reduction target panel part model from the vibration transmission frame part models.

In the present embodiment, the vibration transmission frame part model specification process S5 has a vibration energy analysis condition setting step S5a, a vibration energy analysis step S5b, and a vibration transmission frame part model specification step S5c as illustrated in FIG. 4. The vibration transmission frame part model specification process S5 is a process performed by the vibration transmission frame part model specification unit 17 of the vibration noise reduction analyzer 1.

First, at the vibration energy analysis condition setting step S5a, vibrations inputted to the exciter of the automotive body mesh model, displacement by the vibrations, or the like are set as vibration energy analysis conditions applied in vibration energy analysis for obtaining the vibration energy of each mesh in the vibration transmission frame part models and the vibration noise reduction target panel part model. The vibration energy analysis condition setting step S5a is performed by the vibration energy analysis condition setting section 17a of the vibration transmission frame part model specification unit 17.

The vibration energy analysis (vibration intensity analysis) means calculation of the vibration energy of each mesh from energy balance between elements (meshes) of a target structure. In the present embodiment, the vibration energy calculated by the vibration energy analysis is physical energy or strain energy of each mesh.

Subsequently, at the vibration energy analysis step S5b, the vibration energy of each mesh is obtained from energy balance between meshes in each of the vibration transmission frame part models and the vibration noise reduction target panel part model in the automotive body mesh model under the vibration energy analysis conditions set at the vibration energy analysis condition setting step S5a. The vibration energy analysis step S5b is performed by the vibration energy analysis section 17b of the vibration transmission frame part model specification unit 17.

At the vibration transmission frame part model specification step S5c, vibration transmission frame part models that serve as a vibration transmission path of the vibration noise reduction target panel part model in the specific frequency band selected at the specific frequency band selection process S3 for the vibration noise reduction target panel part model are selected based on the vibration energy value obtained for each mesh at the vibration energy analysis step S5b. A vibration transmission frame part model having large mesh vibration energy obtained at the vibration energy analysis step S5b is also specified from the selected vibration transmission frame part models. The vibration transmission frame part model specification step S5c is performed by the vibration transmission frame part model specification section 17c of the vibration transmission frame part model specification unit 17.

The vibration energy as an index for specifying the vibration transmission frame part model at the vibration transmission frame part model specification step S5c may be the physical energy or the strain energy obtained as the vibration energy of each mesh at the vibration energy analysis step S5b.

### «Individual mesh sheet thickness optimization process»

The individual mesh sheet thickness optimization process S7 obtains a sheet thickness optimized for each mesh of the vibration transmission frame part model specified at the vibration transmission frame part model specification process S5.

In the present embodiment, the individual mesh sheet thickness optimization process S7 has an individual mesh sheet thickness optimization analysis condition setting step S7a and an individual mesh sheet thickness optimization analysis step S7b as illustrated in FIG. 4. The steps are performed by the individual mesh sheet thickness optimization analysis condition setting section 19a and the individual mesh sheet thickness optimization analysis section 19b of the individual mesh sheet thickness optimization unit 19 of the vibration noise reduction analyzer 1.

First, at the individual mesh sheet thickness optimization analysis condition setting step S7a, sheet thickness optimization analysis conditions for each mesh in sheet thickness optimization analysis for optimizing the sheet thickness of each mesh are set.

In the present embodiment, an objective function regarding vibration noise in the vibration noise reduction target panel part model and a constraint regarding a total weight of the vibration transmission frame part model are set as the sheet thickness optimization analysis conditions for each mesh.

The objective function is set to minimization of the equivalent radiated power in the specific frequency band of the vibration noise reduction target panel part model as the vibration noise index of the automotive panel part. Here, the specific frequency band is the specific frequency band selected at the specific frequency band selection process S3 for the vibration noise reduction target panel part model. Additionally, the constraint is set such that the total weight of the vibration transmission frame part model is equal to or less than a predetermined weight.

Subsequently, at the individual mesh sheet thickness optimization analysis step S7b, the sheet thicknesses of the meshes in the automotive body mesh model are set as design variables, and the sheet thickness optimization analysis to optimize the set sheet thickness of each mesh is performed so as to satisfy the objective function and the constraint set at the individual mesh sheet thickness optimization analysis condition setting step S7a. The sheet thickness optimized for each mesh is thereby obtained. Here, the value or range of the design variable set for each mesh is preferably set according to the type of the sheet thickness such as a steel sheet used for manufacture of an actual vibration transmission frame part.

A large sheet thickness of the mesh in the vibration transmission frame part model obtained at the individual mesh sheet thickness optimization analysis step S7b means that the sheet thickness of the mesh increases the stiffness of the vibration noise reduction target panel part model, greatly contributing to the minimization of the equivalent radiated power (ERP) in the specific frequency band. This indicates that the large sheet thickness of the mesh greatly contributes to reduction of vibration noise in the panel part as the vibration noise reduction target.

Meanwhile, a small sheet thickness of the mesh in the vibration transmission frame part model obtained at the individual mesh sheet thickness optimization analysis step S7b means that the sheet thickness of the mesh less contributes to the stiffness of the vibration noise reduction target panel part model, and less contributes to the minimization of the equivalent radiated power (ERP) in the specific frequency band. This indicates that the small sheet thickness of the mesh less contributes to reduction of vibration noise in the panel part as the vibration noise reduction target.

### «Divided area setting process for Vibration transmission frame part model»

The divided area setting process S9 for the vibration transmission frame part model sets divided areas obtained by dividing the vibration transmission frame part model specified at the vibration transmission frame part model specification process S5 into groups each having a predetermined range of sheet thicknesses based on the sheet thickness optimized for each mesh at the individual mesh sheet thickness optimization process S7. In the present embodiment, the divided area setting process S9 for the vibration transmission frame part model is performed by the divided area setting unit 21 for the vibration transmission frame part model of the vibration noise reduction analyzer 1.

Since each mesh having the sheet thickness obtained at the individual mesh sheet thickness optimization process S7 is significantly small, it is difficult to manufacture the actual vibration transmission frame part while changing the sheet thickness according to such subdivided meshes.

Thus, for the vibration transmission frame part model specified at the vibration transmission frame part model specification process S5, meshes, the optimized sheet thicknesses of which obtained at the individual mesh sheet thickness optimization process S7 are within a predetermined range, are put into a group, and the vibration transmission frame part model is divided by the area of each mesh group to set the divided areas.

The predetermined range of the sheet thickness of each mesh for dividing the vibration transmission frame part model is preferably set according to, for example, the type of the sheet thickness such as a steel sheet used for manufacture of the actual vibration transmission frame part. Additionally, the steel sheet having a different sheet thickness in each division can be manufactured by means of a tailored blank or the like, and press-formed into the vibration transmission frame part.

### «Individual Divided-area sheet thickness optimization process»

The individual divided-area sheet thickness optimization process S11 obtains a sheet thickness optimized for each divided area of the vibration transmission frame part model specified at the vibration transmission frame part model specification process S5. In the present embodiment, the individual divided-area sheet thickness optimization process S11 has an individual divided-area sheet thickness optimization analysis condition setting step S11a and an individual divided-area sheet thickness optimization analysis step S11b as illustrated in FIG. 4. The steps are performed by the individual divided-area sheet thickness optimization analysis condition setting section 23a and the individual divided-area sheet thickness optimization analysis section 23b of the individual divided-area sheet thickness optimization unit 23 of the vibration noise reduction analyzer 1.

First, at the individual divided-area sheet thickness optimization analysis condition setting step S11a, sheet thickness optimization analysis conditions for each divided area in sheet thickness optimization analysis for optimizing the sheet thickness of each divided area are set. In the present embodiment, an objective function regarding vibration noise in the vibration noise reduction target panel part model and a constraint regarding a total weight of the vibration transmission frame part model are set as the sheet thickness optimization analysis conditions for each divided area.

The objective function is set to minimization of the equivalent radiated power in the specific frequency band of the vibration noise reduction target panel part model as the vibration noise index of the automotive panel part. Here, the specific frequency band is the specific frequency band selected by the specific frequency band selection process S3 for the vibration noise reduction target panel part model. Additionally, the constraint is set such that the total weight of the vibration transmission frame part model is equal to or less than a predetermined weight.

Subsequently, at the individual divided-area sheet thickness optimization analysis step S11b, the sheet thicknesses of the divided areas of the vibration transmission frame part model specified at the vibration transmission frame part model specification process S5 are set as design variables, and the sheet thickness optimization analysis to optimize the set sheet thickness of each divided area is performed so as to satisfy the objective function and the constraint set at the individual divided-area sheet thickness optimization analysis condition setting step S11a. The sheet thickness optimized for each divided area is thereby obtained. The value or range of the design variable set for each divided area is preferably set according to the type of the sheet thickness such as a steel sheet used for manufacture of the actual vibration transmission frame part.

A large sheet thickness of the divided area in the vibration transmission frame part model obtained at the individual divided-area sheet thickness optimization analysis step S11b means that the sheet thickness of the divided area increases the stiffness of the vibration noise reduction target panel part model, greatly contributing to the minimization of the equivalent radiated power in the specific frequency band, that is, the reduction of vibration noise.

Meanwhile, a small sheet thickness of the divided area in the vibration transmission frame part model obtained at the individual divided-area sheet thickness optimization analysis step S11b means that the sheet thickness of the divided area less contributes to the stiffness of the vibration noise reduction target panel part model, and less contributes to the reduction of vibration noise.

### «Divided area/optimal sheet thickness determination process for Vibration transmission frame part»

The divided area/optimal sheet thickness determination process S13 for the vibration transmission frame part determines divided areas of the vibration transmission frame part corresponding to the specified vibration transmission frame part model, and an optimal sheet thickness of each of the divided areas based on the divided areas set at the divided area setting process S9 for the vibration transmission frame part model and the optimized sheet thickness of each divided area obtained at the individual divided-area sheet thickness optimization analysis step S11b regarding the vibration transmission frame part model specified at the vibration transmission frame part model specification process S5. In the present embodiment, the divided area/optimal sheet thickness determination process S13 for the vibration transmission frame part is performed by the divided area/optimal sheet thickness determination unit 25 for the vibration transmission frame part of the vibration noise reduction analyzer 1.

The operation effects of the vibration noise reduction analysis method and analyzer according to the present embodiment will be described below based on an example in which the vibration transmission frame part model in the vibration transmission path that leads from the exciter 31a to the roof panel model 33 in the automotive body mesh model 31 illustrated in FIGS. 2 and 3 was specified and the optimal divided areas of the specified vibration transmission frame part model and their optimal sheet thicknesses were obtained in order to reduce vibration noise caused by vibrations of the roof panel model 33 of the automotive body mesh model 31.

First, the automotive body mesh model acquisition unit 13 (FIG. 1) acquired the automotive body mesh model 31 illustrated in FIGS. 2 and 3. As described above, the automotive body mesh model 31 includes the roof panel model 33 as the vibration noise reduction target panel part model, and the roof rail model 35, the A pillar model 37, the B pillar model 39, the C pillar model 41, and the front subframe model 43 as the vibration transmission frame part models. The exciter 31a in the automotive body frame of the automobile is also set in the front subframe model 43. A roof rail has a structure in which a roof rail outer and a roof rail inner are combined. As the roof rail model 35, a roof rail (LH) model 35a and a roof rail (RH) model 35b obtained by modeling a roof rail (LH) as a left roof rail inner and a roof rail (RH) as a right roof rail inner, each with meshes, were employed as the analysis targets without using the roof rail outer.

Subsequently, the specific frequency band corresponding to the equivalent radiated power (ERP) to be minimized was selected for the vibration noise reduction target panel part model in relation to setting the objective function for performing the sheet thickness optimization analysis of the vibration transmission frame part described below.

The frequency band or the vibration mode of the vibrations inputted to the exciter of the automotive body mesh model was determined by the frequency response analysis using the automotive body mesh model including the vibration noise reduction target panel part model.

The equivalent radiated power (ERP) of the roof panel model 33 as the vibration noise reduction target panel part model varies depending on the frequency. Thus, a frequency band of 70 to 80 Hz was selected as the specific frequency band having large equivalent radiated power (ERP). In a comparison example with no change in the sheet thickness of the vibration transmission frame part (sheet thickness: 1.4 mm), the equivalent radiated power (ERP) in this specific frequency band (70 to 80 Hz) was 29.9 dB.

The vibration transmission frame part model specification unit 17 (FIG. 1) then selected the vibration transmission frame part models serving as the vibration transmission path from the exciter 31a to the roof panel model 33 in the automotive body mesh model 31, and specified the vibration transmission frame part model greatly contributing to the vibrations of the roof panel model 33 from the selected vibration transmission frame part models by the vibration energy analysis of the automotive body mesh model 31.

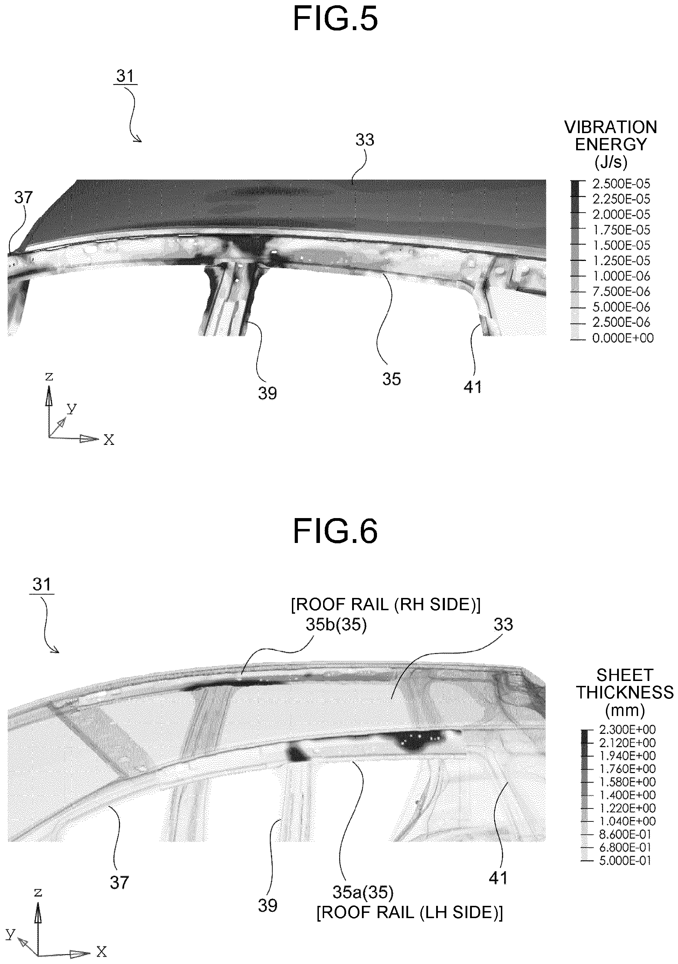

As a vibration condition applied to the exciter 31a of the automotive body mesh model 31 in the vibration energy analysis, a cyclic load of 1N in the automotive body vertical direction at 0 to 200 Hz was employed. FIG. 5 illustrates a result of vibration acceleration in each mesh of the automotive body mesh model 31, obtained by the vibration energy analysis.

Based on this result, the front subframe model 43 (refer to FIG. 3), a rocker model (not illustrated), the A pillar model 37 (refer to FIG. 5), the B pillar model 39 (FIG. 5), and the roof rail model 35 (FIG. 5) were selected as the vibration transmission frame part models serving as the vibration transmission path from the exciter 31a to the roof panel model 33. The roof rail model 35 having a large vibration energy (vibration acceleration) value was specified as the vibration transmission frame part model greatly contributing to the vibration noise in the roof panel model 33 from the selected vibration transmission frame part models as illustrated in FIG. 5.

Subsequently, the sheet thickness optimization analysis of the roof rail model 35 as the vibration transmission frame part model was performed. As the sheet thickness optimization analysis, the optimal sheet thickness was obtained for each mesh of the roof rail model 35, and the objective function and the constraint were set as the sheet thickness optimization analysis conditions for each mesh.

The objective function was set to the minimization of the equivalent radiated power (ERP) of the roof panel model 33. The constraint was set to the total weight of the roof rail model 35 (=2.85 kg) or less.

FIG. 6 illustrates a result of a distribution of the sheet thickness optimized for each mesh of the roof rail (LH) model 35a and the roof rail (RH) model 35b by the sheet thickness optimization of the roof rail model 35 as the sheet thickness optimization by the individual mesh sheet thickness optimization unit 19.

The divided area setting unit 21 for the vibration transmission frame part model set the divided areas of the roof rail model 35 by dividing the roof rail model 35 into a plurality of areas including respective sheet thicknesses of an actual steel sheet, a sheet thickness of 0 to smaller than 0.75 mm, 0.75 mm to smaller than 1.1 mm, 1.1 mm to smaller than 1.5 mm, and 1.5 mm or larger, based on the sheet thickness obtained for each mesh of the roof rail model 35.

Subsequently, the individual divided-area sheet thickness optimization unit 23 performed the sheet thickness optimization analysis for each of the set divided areas. The individual divided-area sheet thickness optimization analysis condition setting section 23a set the sheet thickness optimization analysis conditions for each divided area similarly to those in the above sheet thickness optimization analysis for each mesh by setting the objective function to the minimization of the equivalent radiated power (ERP) of the roof panel model 33 as the vibration noise index of the roof panel, and setting the constraint to the total weight of the roof rail model 35 equal to or less than a predetermined weight (=2.85 kg).

The individual divided-area sheet thickness optimization analysis condition setting section 23a also set the sheet thicknesses as the design variables for the respective divided areas in the roof rail model 35 as the vibration transmission frame part model. The design variables set by the individual divided-area sheet thickness optimization analysis condition setting section 23a were set at 0.05 mm pitch from 0.5 mm to 2.3 mm.

The individual divided-area sheet thickness optimization analysis section 23b then obtained the optimal sheet thickness for each divided area under the conditions set by the individual divided-area sheet thickness optimization analysis condition setting section 23a.

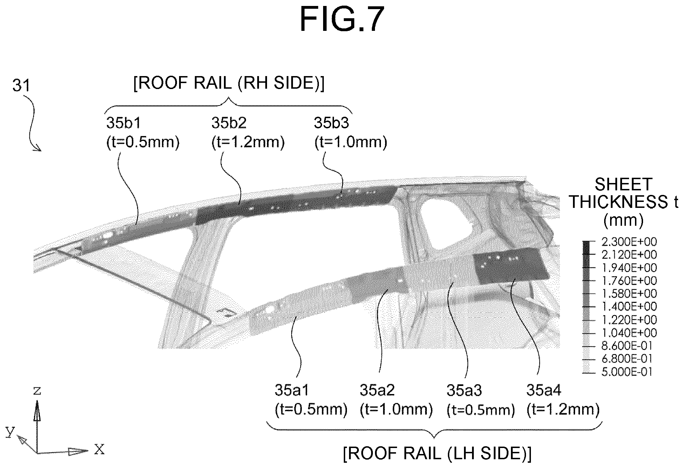

FIG. 7 illustrates a result of obtaining the divided areas of the roof rail model 35 composed of the two members of the roof rail (LH) model 35a on the automotive body left side and the roof rail (RH) model 35b on the automotive body right side as illustrated in FIG. 2, and their optimized sheet thicknesses obtained so as to minimize the equivalent radiated power by the vibration noise reduction analysis method and analyzer according to the present embodiment.

Such a result was obtained for the roof rail (LH) model 35a on the automotive body left side in the automotive body width direction that four divided areas of an area 35a1 connected to the A pillar model 37, an area 35a2 to which the B pillar model 39 was connected, an area 35a3 between the B pillar model 39 and the C pillar model 41, and an area 35a4 to which the C pillar model 41 was connected were obtained, and that the sheet thickness of the area 35a1 was 0.5 mm, the sheet thickness of the area 35a2 was 1.0 mm, the sheet thickness of the area 35a3 was 0.5 mm, and the sheet thickness of the area 35a4 was 1.2 mm.

Meanwhile, such a result was obtained for the roof rail (RH) model 35b on the automotive body right side in the automotive body width direction that three divided areas of an area 35b2 connected to the B pillar model 39, an area 35b1 on the front side of the area 35b2 in the automotive body longitudinal direction, and an area 35b3 on the rear side thereof were obtained, and that the sheet thickness of the area 35b1 was 0.5 mm, the sheet thickness of the area 35b2 was 1.2 mm, and the sheet thickness of the area 35b3 was 1.0 mm.

When the roof rail model 35 was divided into the divided areas based on its part shape and their sheet thicknesses were optimized by the vibration noise reduction analysis method and analyzer according to the present embodiment, the equivalent radiated power of the roof panel model was 26.9 dB. The vibration noise was reduced by 3.0 dB (about 10%) as compared to the equivalent radiated power of 29.9 dB in the comparative example in which the roof rail model 35 had the fixed sheet thickness (1.4 mm).

It has been described above that the vibration noise reduction analysis method and analyzer according to the present embodiment allow for logical and efficient reduction of vibration noise in the automotive panel part without the need for empirically or intuitively increasing the weight or significantly changing the shape of the vibration transmission frame part in the vibration transmission path that causes the vibration noise in the panel part, and can contribute to an improvement in the quietness and commercial value of the automobile.

Moreover, by dividing the vibration transmission frame part selected as the one in the vibration transmission path of the automobile into the areas and obtaining the optimal sheet thickness for each divided area, the vibration transmission frame part can be easily manufactured by press forming by use of a tailored blank (TWB) corresponding to the divided areas with different sheet thicknesses.

### Industrial Applicability

The present invention provides the vibration noise reduction analysis method of claim 1 and analyzer of claim 2 for automotive panel parts, used for reducing vibration noise in the panel part transmitted through the frame parts from the vibration source of the automobile.

### Reference Signs List

1 VIBRATION NOISE REDUCTION ANALYZER
3 DISPLAY DEVICE
5 INPUT DEVICE
7 MEMORY STORAGE
9 WORKING DATA MEMORY
11 ARITHMETIC PROCESSOR
13 AUTOMOTIVE BODY MESH MODEL ACQUISITION UNIT
15 SPECIFIC FREQUENCY BAND SELECTION UNIT FOR VIBRATION NOISE REDUCTION TARGET PANEL PART MODEL
17 VIBRATION TRANSMISSION FRAME PART MODEL SPECIFICATION UNIT
17a VIBRATION ENERGY ANALYSIS CONDITION SETTING SECTION
17b VIBRATION ENERGY ANALYSIS SECTION
17c VIBRATION TRANSMISSION FRAME PART MODEL SPECIFICATION SECTION
19 INDIVIDUAL MESH SHEET THICKNESS OPTIMIZATION UNIT
19a INDIVIDUAL MESH SHEET THICKNESS OPTIMIZATION ANALYSIS CONDITION SETTING SECTION
19b INDIVIDUAL MESH SHEET THICKNESS OPTIMIZATION ANALYSIS SECTION
21 DIVIDED AREA SETTING UNIT FOR VIBRATION TRANSMISSION FRAME PART MODEL
23 INDIVIDUAL DIVIDED-AREA SHEET THICKNESS OPTIMIZATION UNIT
23a INDIVIDUAL DIVIDED-AREA SHEET THICKNESS OPTIMIZATION ANALYSIS CONDITION SETTING SECTION
23b INDIVIDUAL DIVIDED-AREA SHEET THICKNESS OPTIMIZATION ANALYSIS SECTION
25 DIVIDED AREA/OPTIMAL SHEET THICKNESS DETERMINATION UNIT FOR VIBRATION TRANSMISSION FRAME PART
30 AUTOMOTIVE BODY MESH MODEL FILE
31 AUTOMOTIVE BODY MESH MODEL
31a EXCITER
33 ROOF PANEL MODEL
35 ROOF RAIL MODEL
35a ROOF RAIL (LH) MODEL
35b ROOF RAIL (RH) MODEL
37 A PILLAR MODEL
39 B PILLAR MODEL
41 C PILLAR MODEL
43 FRONT SUBFRAME MODEL
51 AUTOMOBILE
53 ENGINE
55 TIRE
57 FRAME PART
59 PANEL PART

## Claims

1. A vibration noise reduction analysis method for automotive panel parts, the method being executed by a computer and used for reducing vibration noise in a panel part caused by vibrations transmitted from an exciter of an automobile to the panel part through vibration transmission frame parts, the method comprising:
an automotive body mesh model acquisition process (S1);
a specific frequency band selection process for a vibration noise reduction target panel part model (S3);
a vibration transmission frame part model specification process (S5);
an individual mesh sheet thickness optimization
process (S7);
a divided area setting process for a vibration transmission frame part model (S9);
an individual divided-area sheet thickness optimization process (S11); and
a divided area/optimal sheet thickness determination process for a vibration transmission frame part (S13), wherein
the automotive body mesh model acquisition process (S1) comprises acquiring an automotive body mesh model including a vibration noise reduction target panel part model and vibration transmission frame part models obtained by modeling the panel part as a vibration noise reduction target and the vibration transmission frame parts that transmit vibrations from the exciter, each with meshes, and in which the exciter is set,
the specific frequency band selection process for a vibration noise reduction target panel part model (S3) comprises
obtaining frequency characteristics of equivalent radiated power, ERP, of the vibration noise reduction target panel part model as a vibration noise index of the panel part as the vibration noise reduction target, and
selecting a specific frequency band based on the obtained frequency characteristics of the equivalent radiated power, ERP,
the vibration transmission frame part model specification process (S5) comprises
obtaining vibration energy of each mesh in the vibration transmission frame part models and the vibration noise reduction target panel part model, and
specifying a vibration transmission frame part model (S5c) that greatly contributes to vibrations in the specific frequency band of the vibration noise reduction target panel part model from the vibration transmission frame part models,
the individual mesh sheet thickness optimization process (S7) comprises obtaining a sheet thickness optimized for each mesh of the specified vibration transmission frame part model by performing sheet thickness optimization analysis to optimize the sheet thickness with an objective function set to minimization of the equivalent radiated power in the specific frequency band of the vibration noise reduction target panel part model, a constraint set to a total weight of the specified vibration transmission frame part model equal to or less than a predetermined weight, and a design variable set to the sheet thickness of each mesh of the specified vibration transmission frame part model,
the divided area setting process for a vibration transmission frame part model (S9) comprises setting divided areas obtained by dividing the specified vibration transmission frame part model into groups each having a predetermined range of sheet thicknesses based on the optimized sheet thickness of each mesh obtained at the individual mesh sheet thickness optimization process,
the individual divided-area sheet thickness optimization process (S11) comprises obtaining a sheet thickness optimized for each divided area of the specified vibration transmission frame part model by performing sheet thickness optimization analysis (S11b) to optimize the sheet thickness with an objective function set to minimization of the equivalent radiated power in the specific frequency band of the vibration noise reduction target panel part model, a constraint set to a total weight of the specified vibration transmission frame part model equal to or less than a predetermined weight, and a design variable set to the sheet thickness of each of the divided areas of the specified vibration transmission frame part model, and
the divided area/optimal sheet thickness determination process for a vibration transmission frame part (S13) comprises determining divided areas of the vibration transmission frame part corresponding to the specified vibration transmission frame part model, and an optimal sheet thickness of each of the divided areas based on the divided areas of the specified vibration transmission frame part model and the sheet thickness optimized for each of the divided areas.

2. A vibration noise reduction analyzer for automotive panel parts, the analyzer being used for reducing vibration noise in a panel part caused by vibrations transmitted from an exciter of an automobile to the panel part through vibration transmission frame parts, the analyzer comprising:
an automotive body mesh model acquisition unit (13);
a specific frequency band selection unit for a vibration noise reduction target panel part model (15);
a vibration transmission frame part model specification unit (17);
an individual mesh sheet thickness optimization unit (19);
a divided area setting unit for a vibration transmission frame part model (21);
an individual divided-area sheet thickness optimization unit (23); and
a divided area/optimal sheet thickness determination unit for a vibration transmission frame part (25), wherein
the automotive body mesh model acquisition unit (13) is configured to acquire an automotive body mesh model including a vibration noise reduction target panel part model and vibration transmission frame part models obtained by modeling the panel part as a vibration noise reduction target and the vibration transmission frame parts that transmit vibrations from the exciter, each with meshes, and in which the exciter is set,
the specific frequency band selection unit for a vibration noise reduction target panel part model (15) is configured to
obtain frequency characteristics of equivalent radiated power , ERP, of the vibration noise reduction target panel part model as a vibration noise index of the panel part as the vibration noise reduction target, and
select a specific frequency band based on the obtained frequency characteristics of the equivalent radiated power, ERP,
the vibration transmission frame part model specification unit (17) is configured to
obtain vibration energy of each mesh in the vibration transmission frame part models and the vibration noise reduction target panel part model, and
specify a vibration transmission frame part model that greatly contributes to vibrations in the specific frequency band of the vibration noise reduction target panel part model from the vibration transmission frame part models,
the individual mesh sheet thickness optimization unit (19) is configured to obtain a sheet thickness optimized for each mesh of the specified vibration transmission frame part model by performing sheet thickness optimization analysis to optimize the sheet thickness with an objective function set to minimization of the equivalent radiated power in the specific frequency band of the vibration noise reduction target panel part model, a constraint set to a total weight of the specified vibration transmission frame part model equal to or less than a predetermined weight, and a design variable set to the sheet thickness of each mesh of the specified vibration transmission frame part model,
the divided area setting unit for a vibration transmission frame part model (21) is configured to set divided areas obtained by dividing the specified vibration transmission frame part model into groups each having a predetermined range of sheet thicknesses based on the optimized sheet thickness of each mesh obtained by the individual mesh sheet thickness optimization unit,
the individual divided-area sheet thickness optimization unit (23) is configured to obtain a sheet thickness optimized for each divided area of the specified vibration transmission frame part model by performing sheet thickness optimization analysis to optimize the sheet thickness with an objective function set to minimization of the equivalent radiated power in the specific frequency band of the vibration noise reduction target panel part model, a constraint set to a total weight of the specified vibration transmission frame part model equal to or less than a predetermined weight, and a design variable set to the sheet thickness of each of the divided areas of the specified vibration transmission frame part model, and
the divided area/optimal sheet thickness determination unit for a vibration transmission frame part (25) is configured to determine divided areas of the vibration transmission frame part corresponding to the specified vibration transmission frame part model, and an optimal sheet thickness of each of the divided areas based on the divided areas of the specified vibration transmission frame part model and the sheet thickness optimized for each of the divided areas.

## Patentansprüche

1. Verfahren zur Analyse der Reduzierung von Vibrationsgeräuschen für Automobilverkleidungsteile, wobei das Verfahren von einem Computer ausgeführt wird und zur Reduzierung von Vibrationsgeräuschen in einem Verkleidungsteil verwendet wird, die durch Vibrationen verursacht werden, die von einem Erreger eines Automobils über Vibrationsübertragungsrahmenteile auf das Verkleidungsteil übertragen werden, wobei das Verfahren umfasst:
einen Vorgang zur Erfassung eines Netzmodells einer Automobilkarosserie (S1);
einen Vorgang zur Auswahl eines spezifischen Frequenzbandes für ein Modell eines Verkleidungsteils mit dem Ziel der Reduzierung von Vibrationsgeräuschen (S3);
einen Vorgang zur Spezifizierung eines Modells eines Vibrationsübertragungsrahmenteils (S5);
einen Vorgang zur Optimierung der Dicke einzelner Netzblätter (S7);
einen Vorgang zur Einstellung eines geteilten Bereichs für ein Modell eines Vibrationsübertragungsrahmenteils (S9);
einen Vorgang zur Optimierung einzelner Blattdicke mit geteiltem Bereich (S11); und
einen Vorgang zur Bestimmung eines geteilten Bereichs/einer optimalen Blattdicke eines Vibrationsübertragungsrahmenteils (S13), wobei
der Vorgang zur Erfassung eines Netzmodells einer Automobilkarosserie (S1) das Erfassen eines Netzmodells einer Automobilkarosserie umfasst, das ein Modell eines Verkleidungsteils mit dem Ziel der Reduzierung von Vibrationsgeräuschen und Modelle eines Vibrationsübertragungsrahmenteils einschließt, die erhalten werden durch Modellieren des Verkleidungsteils als Ziel der Reduzierung von Vibrationsgeräuschen und der Vibrationsübertragungsrahmenteile, die Vibrationen von dem Erreger übertragen, jeweils mit Netzen, und in denen der Erreger angeordnet ist,
der Vorgang zur Auswahl eines spezifischen Frequenzbandes für ein Modell eines Verkleidungsteils mit dem Ziel der Reduzierung von Vibrationsgeräuschen (S3) das Erhalten von Frequenzmerkmalen von äquivalenter Strahlungsleistung, ERP, des Modells des Verkleidungsteils mit dem Ziel der Reduzierung von Vibrationsgeräuschen als Vibrationsgeräuschindex des Verkleidungsteils mit dem Ziel der Reduzierung von Vibrationsgeräuschen umfasst, und
Auswählen eines spezifischen Frequenzbandes auf Grundlage der erhaltenen Frequenzmerkmale der äquivalenten Strahlungsleistung, ERP,
der Vorgang zur Spezifizierung eines Modells des Vibrationsübertragungsrahmenteils (S5) das Erhalten von Vibrationsenergie jedes Netzes in den Modellen des Vibrationsübertragungsrahmenteils und dem Modell des Verkleidungsteils mit dem Ziel der Reduzierung von Vibrationsgeräuschen umfasst, und
Spezifizieren eines Modells eines Vibrationsübertragungsrahmenteils (S5c), das in hohem Maße zu Vibrationen in dem spezifischen Frequenzband des Modells des Verkleidungsteils mit dem Ziel der Reduzierung von Vibrationsgeräuschen beiträgt, aus den Modellen der Vibrationsübertragungsrahmenteile,
der Vorgang zur Optimierung der Dicke einzelner Netzblätter (S7) das Erhalten einer Blattdicke umfasst, die für jedes Netz des spezifizierten Modells des Vibrationsübertragungsrahmenteils optimiert ist, indem eine Analyse zur Optimierung der Blattdicke durchgeführt wird, um die Blattdicke mit einer Zielfunktion zu optimieren, die auf Minimierung der äquivalenten Strahlungsleistung in dem spezifischen Frequenzband des Modells des Verkleidungsteils mit Ziel der Reduzierung von Vibrationsgeräuschen eingestellt ist, wobei eine Beschränkung auf ein Gesamtgewicht des spezifizierten Modells des Vibrationsübertragungsrahmenteils gleich oder kleiner als ein vorbestimmtes Gewicht eingestellt ist, und eine Entwurfsvariable auf die Blattdicke jedes Netzes des spezifizierten Modells des Vibrationsübertragungsrahmenteils eingestellt ist,
der Vorgang zum Einstellen eines geteilten Bereichs für ein Modell eines Vibrationsübertragungsrahmenteils (S9) das Einstellen geteilter Bereiche umfasst, die durch Teilen des spezifizierten Modells eines Vibrationsübertragungsrahmenteils erhalten werden, in Gruppen, die jeweils einen vorbestimmten Bereich von Blattdicken aufweisen, auf Grundlage der optimierten Blattdicke jedes Netzes, die bei dem Vorgang zur Optimierung einzelner Netzblattdicke erhalten wird,
der Vorgang (S11) der Optimierung einzelner geteilter Bereiche der Blattdicke das Erhalten einer Blattdicke umfasst, die für jeden geteilten Bereich des spezifizierten Modells des Vibrationsübertragungsrahmenteils optimiert ist, indem eine Analyse (S11b) der Blattdicke durchgeführt wird, um die Blattdicke mit einer Zielfunktion zu optimieren, die auf Minimierung der äquivalenten Strahlungsleistung in dem spezifischen Frequenzband des Modells des Verkleidungsteils mit Ziel der Reduzierung von Vibrationsgeräuschen eingestellt ist, wobei eine Einschränkung auf ein Gesamtgewicht des spezifizierten Modells des Vibrationsübertragungsrahmenteils gleich oder kleiner als ein vorbestimmtes Gewicht eingestellt ist, und eine Entwurfsvariable auf die Blattdicke jedes der geteilten Bereiche des spezifizierten Modells des Vibrationsübertragungsrahmenteils eingestellt ist, und
der Vorgang zur Bestimmung des geteilten Bereichs/der optimalen Blattdicke eines Vibrationsübertragungsrahmenteils (S13) das Bestimmen von geteilten Bereichen des Vibrationsübertragungsrahmenteils, die dem spezifizierten Modell des Vibrationsübertragungsrahmenteils entsprechen, und einer optimalen Blattdicke für jeden der geteilten Bereiche auf Grundlage der geteilten Bereiche des spezifizierten Modells des Vibrationsübertragungsrahmenteils und der für jeden der geteilten Bereiche optimierten Blattdicke umfasst.

2. Analysator zur Reduzierung von Vibrationsgeräuschen für Automobilverkleidungsteile, wobei der Analysator zur Reduzierung von Vibrationsgeräuschen in einem Verkleidungsteil verwendet wird, die durch Vibrationen verursacht werden, die von einem Erreger eines Automobils durch Vibrationsübertragungsrahmenteile auf das Verkleidungsteil übertragen werden, wobei der Analysator umfasst:
eine Einheit zur Erfassung eines Netzmodells einer Automobilkarosserie (13);
eine Einheit zur Auswahl eines spezifischen Frequenzbandes für ein Modell eines Verkleidungsteils zur Reduzierung von Vibrationsgeräuschen (15);
eine Einheit zur Spezifikation eines Modells eines Vibrationsübertragungsrahmenteils (17);
eine Einheit zur Optimierung der Dicke einzelner Netzblätter (19);
eine Einheit zur Einstellung eines geteilten Bereichs für ein Modell eines Vibrationsübertragungsrahmenteils (21);
eine Einheit zur Optimierung der Dicke einzelner Blätter mit geteiltem Bereich (23); und
eine Einheit zur Bestimmung eines geteilten Bereichs/einer optimalen Blattdicke eines Vibrationsübertragungsrahmenteils (25), wobei
die Einheit zur Erfassung eines Netzmodells einer Automobilkarosserie (13) so konfiguriert ist, dass sie ein Netzmodell der Automobilkarosserie erfasst, das ein Modell eines Verkleidungsteils mit dem Ziel der Reduzierung von Vibrationsgeräuschen und Modelle von Vibrationsübertragungsrahmenteilen einschließt, die erhalten werden durch Modellieren des Verkleidungsteils mit dem Ziel der Reduzierung von Vibrationsgeräuschen und der Vibrationsübertragungsrahmenteile, die Vibrationen von dem Erreger übertragen, jeweils mit Netzen, und in denen der Erreger angeordnet ist,
die Einheit zur Auswahl eines spezifischen Frequenzbandes für ein Modell eines Verkleidungsteils mit dem Ziel der Reduzierung von Vibrationsgeräuschen so konfiguriert ist, dass sie Frequenzmerkmale von äquivalenter Strahlungsleistung, ERP, des Modells des Verkleidungsteils mit dem Ziel der Reduzierung von Vibrationsgeräuschen als Vibrationsgeräuschindex des Verkleidungsteils mit dem Ziel der Reduzierung von Vibrationsgeräuschen erhält und ein spezifisches Frequenzband auf der Grundlage der erhaltenen Frequenzmerkmale der äquivalenten Strahlungsleistung, ERP, auswählt,
die Einheit zur Spezifikation des Modells eines Vibrationsübertragungsrahmenteils (17) so konfiguriert ist, dass sie die Vibrationsenergie jedes Netzes in den Modellen des Vibrationsübertragungsrahmenteils und dem Modell des Verkleidungsteils mit dem Ziel der Reduzierung von Vibrationsgeräuschen erhält, und
ein Modell des Vibrationsübertragungsrahmenteils, das in hohem Maße zu Vibrationen in dem spezifischen Frequenzband des Modells des Verkleidungsteils mit dem Ziel der Reduzierung von Vibrationsgeräuschen beiträgt, aus den Modellen der Vibrationsübertragungsrahmenteile spezifiziert,
die Einheit zur Optimierung der Dicke einzelner Netzblätter (19) so konfiguriert ist, dass sie eine Blattdicke erhält, die für jedes Netzblatt des spezifizierten Modells des Vibrationsübertragungsrahmenteils optimiert ist, indem sie eine Analyse zur Optimierung der Blattdicke durchführt, um die Blattdicke mit einer Zielfunktion zu optimieren, die auf Minimierung der äquivalenten Strahlungsleistung in dem spezifischen Frequenzband des Modells des Verkleidungsteils mit Ziel der Reduzierung von Vibrationsgeräuschen eingestellt ist, wobei eine Beschränkung auf ein Gesamtgewicht des spezifizierten Modells des Vibrationsübertragungsrahmenteils gleich oder kleiner als ein vorbestimmtes Gewicht eingestellt ist, und eine Entwurfsvariable auf die Blattdicke jedes Netzes des spezifizierten Modells des Vibrationsübertragungsrahmenteils eingestellt ist,
die Einheit zum Einstellen eines geteilten Bereichs für ein Modell eines Vibrationsübertragungsrahmenteils (21) so konfiguriert ist, dass sie geteilte Bereiche einstellt, die durch Teilen des spezifizierten Modells des Vibrationsübertragungsrahmenteils in Gruppen, die jeweils einen vorbestimmten Bereich von Blattdicken aufweisen, auf Grundlage der optimierten Blattdicke jedes Netzes erhalten werden, die durch die Einheit zur Optimierung einzelner Netzblattdicke erhalten wird,
die Einheit zur Optimierung der Dicke einzelner Blätter mit geteiltem Bereich (23) so konfiguriert ist, dass sie eine Blattdicke erhält, die für jeden geteilten Bereich des spezifizierten Modells des Vibrationsübertragungsrahmenteils optimiert ist, indem sie eine Analyse der Blattdicke durchführt, um die Blattdicke mit einer Zielfunktion zu optimieren, die auf Minimierung der äquivalenten Strahlungsleistung in dem spezifischen Frequenzband des Modells des Verkleidungsteils mit Ziel der Reduzierung von Vibrationsgeräuschen eingestellt ist, wobei eine Einschränkung auf ein Gesamtgewicht des spezifizierten Modells des Vibrationsübertragungsrahmenteils eingestellt ist, das gleich oder kleiner als ein vorbestimmtes Gewicht ist, und eine Entwurfsvariable auf die Blattdicke jedes der geteilten Bereiche des spezifizierten Modells des Vibrationsübertragungsrahmenteils eingestellt ist, und
die Einheit zur Bestimmung des geteilten Bereichs/der optimalen Blattdicke eines Vibrationsübertragungsrahmenteils (25) so konfiguriert ist, dass sie geteilte Bereiche des Vibrationsübertragungsrahmenteils entsprechend dem spezifizierten Modell des Vibrationsübertragungsrahmenteils und eine optimale Blattdicke jedes der geteilten Bereiche auf Grundlage der geteilten Bereiche des spezifizierten Modells des Vibrationsübertragungsrahmenteils und der für jeden der geteilten Bereiche optimierten Blattdicke bestimmt.

## Revendications

1. Procédé d'analyse de réduction de bruit de vibrations pour pièces de panneau d'automobile, le procédé étant exécuté par un ordinateur et utilisé pour réduire un bruit de vibrations dans une pièce de panneau causé par des vibrations transmises depuis un élément d'excitation d'une automobile vers la pièce de panneau par le biais de pièces de cadre de transmission de vibrations, le procédé comprenant :
un processus d'acquisition de modèle de maillage de carrosserie d'automobile (S1) ;
un processus de sélection de bandes de fréquences spécifiques pour un modèle de pièce de panneau cible de réduction de bruit de vibrations (S3) ;
un processus de spécification de modèle de pièce de cadre de transmission de vibrations (S5) ;
un processus d'optimisation d'épaisseur de feuilles de maillage individuelles (S7) ;
un processus de réglage de zones divisées pour un modèle de pièce de cadre de transmission de vibrations (S9) ;
un processus d'optimisation d'épaisseur de feuilles à zones divisées individuelles (S11) ; et
un processus de détermination d'épaisseur de feuilles optimales/à zones divisées pour une pièce de cadre de transmission de vibrations (S13), dans lequel
le processus d'acquisition de modèle de maillage de carrosserie d'automobile (S1) comprend une acquisition d'un modèle de maillage de carrosserie d'automobile incluant un modèle de pièce de panneau cible de réduction de bruit de vibrations et des modèles de pièce de cadre de transmission de vibrations obtenus en modélisant la pièce de panneau en tant qu'une cible de réduction de bruit de vibrations et les pièces de cadre de transmission de vibrations qui transmettent des vibrations à partir de l'élément d'excitation, chacune avec des maillages, et dans lesquels l'élément d'excitation est réglé,
le processus de sélection de bandes de fréquences spécifiques pour un modèle de pièce de panneau cible de réduction de bruit de vibrations (S3) comprend
une obtention de caractéristiques de fréquence de puissance rayonnée équivalente, ERP, du modèle de pièce de panneau cible de réduction de bruit de vibrations en tant qu'indice de bruit de vibrations de la pièce de panneau en tant que cible de réduction de bruit de vibrations, et
une sélection d'une bande de fréquences spécifique sur la base des caractéristiques de fréquence obtenues de la puissance rayonnée équivalente, ERP,
le processus de spécification de modèle de pièce de cadre de transmission de vibrations (S5) comprend
une obtention d'une énergie de vibrations de chaque maillage dans les modèles de pièce de cadre de transmission de vibrations et du modèle de pièce de panneau cible de réduction de bruit de vibrations, et
une spécification d'un modèle de pièce de cadre de transmission de vibrations (S5c) qui contribue grandement à des vibrations dans la bande de fréquences spécifique du modèle de pièce de panneau cible de réduction de bruit de vibrations à partir des modèles de pièce de cadre de transmission de vibrations,
le processus d'optimisation d'épaisseur de feuilles de maillage individuelles (S7) comprend une obtention d'une épaisseur de feuille optimisée pour chaque maillage du modèle de pièce de cadre de transmission de vibrations spécifié en mettant en oeuvre une analyse d'optimisation d'épaisseur de feuille afin d'optimiser l'épaisseur de feuille avec une fonction objective réglée sur une minimisation de la puissance rayonnée équivalente dans la bande de fréquences spécifique du modèle de pièce de panneau cible de réduction de bruit de vibrations, une contrainte réglée sur un poids total du modèle de pièce de cadre de transmission de vibrations spécifié inférieur ou égal à un poids prédéterminé, et une variable de conception réglée sur l'épaisseur de feuille de chaque maillage du modèle de pièce de cadre de transmission de vibrations spécifié,
le processus de réglage de zones divisées pour un modèle de pièce de cadre de transmission de vibrations (S9) comprend un réglage de zones divisées obtenues en divisant le modèle de pièce de cadre de transmission de vibrations spécifié en groupes présentant chacun une plage prédéterminée d'épaisseurs de feuille sur la base de l'épaisseur de feuille optimisée de chaque maillage obtenue lors du processus d'optimisation d'épaisseur de feuilles de maillage individuelles,
le processus d'optimisation d'épaisseur de feuilles à zones divisées individuelles (S11) comprend une obtention d'une épaisseur de feuille optimisée pour chaque zone divisée du modèle de pièce de cadre de transmission de vibrations spécifié en mettant en oeuvre une analyse d'optimisation d'épaisseur de feuille (S11b) afin d'optimiser l'épaisseur de feuille avec une fonction objective réglée sur une minimisation de la puissance rayonnée équivalente dans la bande de fréquences spécifique du modèle de pièce de panneau cible de réduction de bruit de vibrations, une contrainte réglée sur un poids total du modèle de pièce de cadre de transmission de vibrations spécifié inférieur ou égal à un poids prédéterminé, et une variable de conception réglée sur l'épaisseur de feuille de chacune des zones divisées du modèle de pièce de cadre de transmission de vibrations spécifié, et
le processus de détermination d'épaisseur de feuilles optimales/à zones divisées pour une pièce de cadre de transmission de vibrations (S13) comprend une détermination de zones divisées de la pièce de cadre de transmission de vibrations correspondant au modèle de pièce de cadre de transmission de vibrations spécifié, et d'une épaisseur de feuille optimale de chacune des zones divisées sur la base des zones divisées du modèle de pièce de cadre de transmission de vibrations spécifié et de l'épaisseur de feuille optimisée pour chacune des zones divisées.

2. Analyseur de réduction de bruit de vibrations pour pièces de panneau d'automobile, l'analyseur étant utilisé pour réduire un bruit de vibrations dans une pièce de panneau causé par des vibrations transmises depuis un élément d'excitation d'une automobile vers la pièce de panneau par le biais de pièces de cadre de transmission de vibrations, l'analyseur comprenant :
une unité d'acquisition de modèle de maillage de carrosserie d'automobile (13) ;
une unité de sélection de bandes de fréquences spécifiques pour un modèle de pièce de panneau cible de réduction de bruit de vibrations (15) ;
une unité de spécification de modèle de pièce de cadre de transmission de vibrations (17) ;
une unité d'optimisation d'épaisseur de feuilles de maillage individuelles (19) ;
une unité de réglage de zones divisées pour un modèle de pièce de cadre de transmission de vibrations (21) ;
une unité d'optimisation d'épaisseur de feuilles à zones divisées individuelles (23) ; et
une unité de détermination d'épaisseur de feuilles optimales/à zones divisées pour une pièce de cadre de transmission de vibrations (25), dans lequel
une unité d'acquisition de modèle de maillage de carrosserie d'automobile (13) est configurée pour acquérir un modèle de maillage de carrosserie d'automobile incluant un modèle de pièce de panneau cible de réduction de bruit de vibrations et des modèles de pièce de cadre de transmission de vibrations obtenus en modélisant la pièce de panneau en tant qu'une cible de réduction de bruit de vibrations et les pièces de cadre de transmission de vibrations qui transmettent des vibrations à partir de l'élément d'excitation, chacune avec des maillages, et dans lesquels l'élément d'excitation est réglé,
l'unité de sélection de bandes de fréquences spécifiques pour un modèle de pièce de panneau cible de réduction de bruit de vibrations (15) est configurée pour
obtenir des caractéristiques de fréquence de puissance rayonnée équivalente, ERP, du modèle de pièce de panneau cible de réduction de bruit de vibrations en tant qu'indice de bruit de vibrations de la pièce de panneau en tant que cible de réduction de bruit de vibrations, et
sélectionner une bande de fréquences spécifique sur la base des caractéristiques de fréquence obtenues de la puissance rayonnée équivalente, ERP,
l'unité de spécification de modèle de pièce de cadre de transmission de vibrations (17) est configurée pour
obtenir une énergie de vibrations de chaque maillage dans les modèles de pièce de cadre de transmission de vibrations et du modèle de pièce de panneau cible de réduction de bruit de vibrations, et
spécifier un modèle de pièce de cadre de transmission de vibrations qui contribue grandement à des vibrations dans la bande de fréquences spécifique du modèle de pièce de panneau cible de réduction de bruit de vibrations à partir des modèles de pièce de cadre de transmission de vibrations,
l'unité d'optimisation d'épaisseur de feuilles de maillage individuelles (19) est configurée pour obtenir une épaisseur de feuille optimisée pour chaque maillage du modèle de pièce de cadre de transmission de vibrations spécifié en mettant en oeuvre une analyse d'optimisation d'épaisseur de feuille afin d'optimiser l'épaisseur de feuille avec une fonction objective réglée sur une minimisation de la puissance rayonnée équivalente dans la bande de fréquences spécifique du modèle de pièce de panneau cible de réduction de bruit de vibrations, une contrainte réglée sur un poids total du modèle de pièce de cadre de transmission de vibrations spécifié inférieur ou égal à un poids prédéterminé, et une variable de conception réglée sur l'épaisseur de feuille de chaque maillage du modèle de pièce de cadre de transmission de vibrations spécifié,
l'unité de réglage de zones divisées pour un modèle de pièce de cadre de transmission de vibrations (21) est configurée pour régler des zones divisées obtenues en divisant le modèle de pièce de cadre de transmission de vibrations spécifié en groupes présentant chacun une plage prédéterminée d'épaisseurs de feuille sur la base de l'épaisseur de feuille optimisée de chaque maillage obtenue par l'unité d'optimisation d'épaisseur de feuilles de maillage individuelles,
l'unité d'optimisation d'épaisseur de feuilles à zones divisées individuelles (23) est configurée pour obtenir une épaisseur de feuille optimisée pour chaque zone divisée du modèle de pièce de cadre de transmission de vibrations spécifié en mettant en oeuvre une analyse d'optimisation d'épaisseur de feuille afin d'optimiser l'épaisseur de feuille avec une fonction objective réglée sur une minimisation de la puissance rayonnée équivalente dans la bande de fréquences spécifique du modèle de pièce de panneau cible de réduction de bruit de vibrations, une contrainte réglée sur un poids total du modèle de pièce de cadre de transmission de vibrations spécifié inférieur ou égal à un poids prédéterminé, et une variable de conception réglée sur l'épaisseur de feuille de chacune des zones divisées du modèle de pièce de cadre de transmission de vibrations spécifié, et
l'unité de détermination d'épaisseur de feuilles optimales/à zones divisées pour une pièce de cadre de transmission de vibrations (25) est configurée pour déterminer des zones divisées de la pièce de cadre de transmission de vibrations correspondant au modèle de pièce de cadre de transmission de vibrations spécifié, et une épaisseur de feuille optimale de chacune des zones divisées sur la base des zones divisées du modèle de pièce de cadre de transmission de vibrations spécifié et de l'épaisseur de feuille optimisée pour chacune des zones divisées.
